# EUROPEAN PATENT APPLICATION

(11) **EP 4 715 667 A1**
(43) Date of publication of application: **25.03.2026**
(21) Application number: 23937529.8
(22) Date of filing: 18.05.2023
(51) Int. Cl.: G06N 3/006

(54) **SIMULATION PROGRAM, SIMULATION METHOD, AND INFORMATION PROCESSING DEVICE**

(71) Applicant: FUJITSU LIMITED, Kawasaki-shi, Kanagawa 211-8588 (JP)
(72) Inventor: CHANG, Shuang, Kawasaki-shi, Kanagawa 211-8588 (JP); MARUHASHI, Koji, Kawasaki-shi, Kanagawa 211-8588 (JP)
(74) Representative: Hoffmann Eitle
(86) International application number: PCT/JP2023/018528
(87) International publication number: WO 2024/236792

(57) **Abstract**

Support for spatial design for a behavior simulation is provided.

A computer obtains simulation result data including a plurality of records corresponding to a plurality of agents that act within a designated space, each of the plurality of records including attribute values of a plurality of attributes concerning an action result of one agent among the plurality of agents. Based on the simulation result data, the computer detects one or more causal relationships among the plurality of attributes, each causal relationship indicating that one attribute is a cause of another attribute. Based on the one or more causal relationships, the computer determines, among the plurality of attributes, a cause attribute that indicates a cause for a target attribute indicating an evaluation of the space. The computer outputs information corresponding to the cause attribute.

## Description

### Technical Field

The embodiments discussed herein relate to a simulation program, a simulation method, and an information processing apparatus.

### Background Art

A computer may perform, as a type of computer simulation, a behavior simulation that simulates autonomous actions of a plurality of agents within a designated space. The behavior simulation may be a human behavior simulation that simulates autonomous actions of a plurality of persons. The behavior simulation may be executed to evaluate a quality of design of the designated space.

For example, a simulation method has been proposed in which passenger behavior and a congestion condition in an airport terminal are simulated under a plurality of signage placement policies, thereby supporting decision-making of an airport administrator who installs signage.

### Citation List

### Non-Patent Literature

NPL 1: Shintaro Utsumi, Shingo Takahashi, Kotaro Ohori, and Hirokazu Anai, "Agent-based Analysis for Design of Signage Systems in Large-scale Facilities," Proc. of the 2015 Winter Simulation Conference, pp. 3134-3135, December 2015.

### Summary of Invention

### Technical Problems

A simulation result of a single behavior simulation indicates an evaluation result of one spatial design. However, even when only a final evaluation result is presented, a user sometimes has difficulty grasping the reasons why the evaluation result has been obtained. Therefore, in order to prepare a plurality of spatial designs to be tried, knowledge specific to a target space may be needed by the user. In addition, in order to search for a spatial design with a favorable evaluation result, a computer may execute the behavior simulation for a large number of spatial designs whose contents are slightly different from one another.

As a result, a computational burden of the behavior simulation sometimes becomes large. Accordingly, in one aspect, the present disclosure is intended to support spatial design for the behavior simulation.

### Solution to Problems

In one aspect, a simulation program is provided that causes a computer to execute the following processing: obtaining simulation result data including a plurality of records corresponding to a plurality of agents that act within a designated space, each of the plurality of records including attribute values of a plurality of attributes concerning an action result of one agent among the plurality of agents; detecting, based on the simulation result data, one or more causal relationships among the plurality of attributes, each indicating that one of the plurality of attributes is a cause of another of the plurality of attributes; determining, based on the one or more causal relationships, a cause attribute among the plurality of attributes that indicates a cause for a target attribute that indicates an evaluation of the space; and outputting information corresponding to the cause attribute.

In one aspect, a simulation method executed by a computer is provided. In one aspect, an information processing apparatus including a storing unit and a processing unit is provided.

### Advantageous Effects of Invention

In one aspect, spatial design for behavior simulation is supported.

The above and other objects, features, and advantages of the present invention will become apparent from the following description, taken in conjunction with the accompanying drawings which illustrate preferred embodiments of the present invention by way of example.

### Brief Description of Drawings

[FIG. 1] FIG. 1 illustrates an information processing apparatus according to a first embodiment.
[FIG. 2] FIG. 2 illustrates a hardware example of an information processing apparatus of a second embodiment.
[FIG. 3] FIG. 3 illustrates an example of a design of an airport terminal building.
[FIG. 4] FIG. 4 illustrates an example of an agent table.
[FIG. 5] FIG. 5 illustrates an example of an environment table.
[FIG. 6] FIG. 6 illustrates an example of a combined table.
[FIG. 7] FIG. 7 illustrates an example of a normalized combined table.
[FIG. 8] FIG. 8 illustrates an example of an attribute table.
[FIG. 9] FIG. 9 illustrates an example of a causal graph.
[FIG. 10] FIG. 10 illustrates an example of calculation of causal effects for each scenario.
[FIG. 11] FIG. 11 illustrates an example of an improvement measure table.
[FIG. 12] FIG. 12 illustrates an example of a causal graph after a re-simulation.
[FIG. 13] FIG. 13 illustrates an example of calculation of causal effects after the re-simulation.
[FIG. 14] FIG. 14 illustrates an example of a flow of a human behavior simulation.
[FIG. 15] FIG. 15 illustrates an example of relationships among attribute types.
[FIG. 16] FIG. 16 is a block diagram illustrating a functional example of the information processing apparatus.
[FIG. 17] FIG. 17 is a flowchart illustrating an example of a procedure for agent behavior determination.
[FIG. 18] FIG. 18 is a flowchart illustrating an example of a simulation procedure.

### Description of Embodiments

The embodiments will be described below with reference to the drawings.

### First Embodiment

A first embodiment will be described.

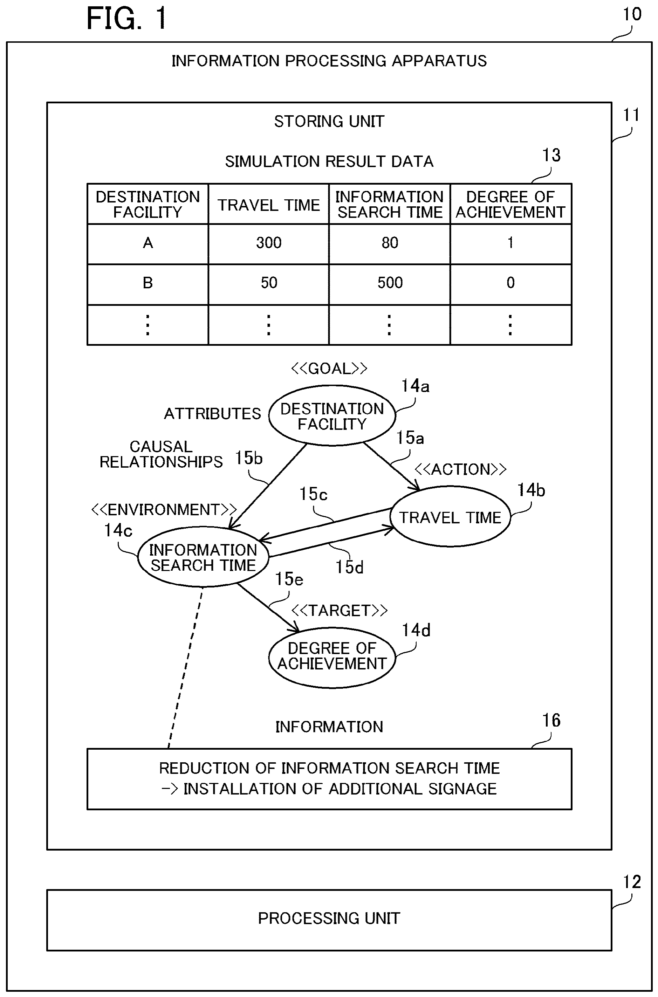

FIG. 1 illustrates an information processing apparatus according to the first embodiment.

An information processing apparatus 10 of the first embodiment supports designing a different, previously untried spatial design by analyzing results of an agent-based behavior simulation. The behavior simulation may be executed by the information processing apparatus 10 or may be executed by another information processing apparatus. The information processing apparatus 10 may be a client apparatus or may be a server apparatus. The information processing apparatus 10 may also be referred to as a computer or as a simulation apparatus.

The information processing apparatus 10 includes a storing unit 11 and a processing unit 12. The storing unit 11 may be a volatile semiconductor memory such as random access memory (RAM) or may be nonvolatile storage such as a hard disk drive (HDD) or a flash memory.

The processing unit 12 is, for example, a processor such as a central processing unit (CPU), a graphics processing unit (GPU), or a digital signal processor (DSP); however, the processing unit 12 may include an electronic circuit such as an application specific integrated circuit (ASIC) or a field programmable gate array (FPGA) . A processor executes a program stored in a memory such as RAM (the storing unit 11 may serve as the memory) . A set of processors may be referred to as a multiprocessor or simply "processor".

The storing unit 11 stores simulation result data 13. The simulation result data 13 is generated by an agent-based behavior simulation. The behavior simulation simulates autonomous actions of a plurality of agents within a designated space. An agent may represent a person, may represent a group of persons, may represent a living organism other than a person, or may represent a nonliving entity such as a vehicle.

Spatial information indicating a spatial design is provided to the behavior simulation. The spatial information may define a shape of a region in which an agent is allowed to move. The spatial information may define facilities that agents may use, such as shops, and may define installations such as signage. The spatial information may define movement rules for agents, such as constraints on movement directions. Agents act according to a predetermined behavior algorithm under constraints indicated by the spatial information. For example, an agent performs a series of actions including selecting a destination facility, searching for a location of the destination facility by using signage, and moving on foot toward the destination facility.

The simulation result data 13 includes a plurality of records corresponding to a plurality of agents. One record indicates an action result of one agent. Each of the plurality of records includes a plurality of attribute values corresponding to a plurality of attributes. The plurality of attributes are indicators concerning the action result and are obtained by observing an action of the same agent from different aspects.

The plurality of attributes may include a goal attribute that indicates a goal of an agent. The goal attribute is, for example, a destination facility that an agent intends to use. The plurality of attributes may include an action attribute that indicates an action executed by an agent. The action attribute is, for example, a travel time. The plurality of attributes may include an environment attribute that indicates an interaction between an agent and a space. The environment attribute is, for example, an information search time or a waiting time at a facility.

The plurality of attributes may include an external factor attribute that indicates a constraint imposed by a space on an agent. The external factor attribute is, for example, a manner of placing signage or a capacity limit of a facility. The plurality of attributes may include a target attribute that corresponds to an evaluation result of a space. The target attribute is, for example, a degree of achievement of a goal of an agent. An indicator related to a satisfaction degree of an agent is preferably used for the target attribute. The simulation result data 13 may be tabular data that uses records as rows (tuples) and uses attributes as columns.

The processing unit 12 executes a causal discovery method on the simulation result data 13. Accordingly, the processing unit 12 detects one or more causal relationships among a plurality of attributes included in the simulation result data 13. One causal relationship indicates that one attribute is a cause of another attribute. For example, the simulation result data 13 includes attributes 14a, 14b, 14c, and 14d. The processing unit 12 detects, among the attributes 14a, 14b, 14c, and 14d, causal relationships 15a, 15b, 15c, 15d, and 15e.

The attribute 14a is the goal attribute. The attribute 14b is the action attribute. The attribute 14c is the environment attribute. The attribute 14d is the target attribute. The causal relationship 15a indicates that the attribute 14a is a cause of the attribute 14b. The causal relationship 15b indicates that the attribute 14a is a cause of the attribute 14c. The causal relationship 15c indicates that the attribute 14b is a cause of the attribute 14c. The causal relationship 15d indicates that the attribute 14c is a cause of the attribute 14b. The causal relationship 15e indicates that the attribute 14c is a cause of the attribute 14d.

One causal relationship indicates that, when an attribute value of an attribute corresponding to a cause changes, an attribute value of an attribute corresponding to a result also changes. For example, the causal discovery method first generates a complete undirected graph including a plurality of nodes corresponding to a plurality of attributes. The causal discovery method detects, from the simulation result data 13, pairs of attributes for which independence holds by testing and deletes, from the graph, edges that indicate the detected pairs of attributes. The causal discovery method determines directions of edges based on the remaining graph structure so that a cyclic graph is not formed.

The processing unit 12 identifies, among the plurality of attributes, a target attribute that indicates an evaluation of the space. The processing unit 12 determines, based on the detected one or more causal relationships, a cause attribute that indicates a cause for the target attribute. The cause attribute is, for example, an attribute that serves as a direct cause that is connected to the target attribute by one causal relationship. The processing unit 12 may determine two or more cause attributes. For example, the processing unit 12 determines, from the causal relationship 15e whose result is the attribute 14d, that the attribute 14c is a cause attribute.

When there are two or more attributes corresponding to causes of the target attribute, the processing unit 12 may narrow down the cause attributes based on magnitudes of causal effects between each attribute and the target attribute. A causal effect represents a strength of influence that one attribute exerts on another attribute and indicates an amount of change in an attribute value of the other attribute when an attribute value of the one attribute is changed by a fixed amount. The processing unit 12 may select attributes whose absolute values of the causal effects exceed a threshold and may preferentially select attributes having larger absolute values of the causal effects.

The processing unit 12 outputs information 16 corresponding to a cause attribute. The information 16 may indicate that the attribute 14c is a cause attribute. The information 16 may indicate that a change in an attribute value of the attribute 14c (for example, a decrease in the attribute value of the attribute 14c) changes an attribute value of the attribute 14d, which is the target attribute (for example, an increase in the attribute value of the attribute 14d). The information 16 may indicate an attribute type of the attribute 14c (for example, that the attribute 14c is the environment attribute).

The information 16 may indicate the causal relationships 15a, 15b, 15c, 15d, and 15e among the attributes 14a, 14b, 14c, and 14d. The information 16 may indicate a spatial-design policy for changing an attribute value of the attribute 14c. For example, the information processing apparatus 10 stores a knowledge database that indicates, for each attribute, a spatial-design policy for changing an attribute value. The processing unit 12 may retrieve, from the knowledge database, a policy for changing an attribute value of the attribute 14c. As one example, installation of additional signage may be considered as a measure in a spatial-design policy for reducing the information search time of an agent.

The processing unit 12 may store the information 16 in nonvolatile storage, may display the information 16 on a display device, or may transmit the information 16 to another information processing apparatus. The information processing apparatus 10 or another information processing apparatus may accept spatial information that has been modified based on the information 16 and may re-execute the behavior simulation based on the modified spatial information.

As described above, the information processing apparatus 10 of the first embodiment acquires the simulation result data 13 including a plurality of records corresponding to a plurality of agents that act within a designated space. Each record includes attribute values of a plurality of attributes concerning an action result of an agent. The information processing apparatus 10 detects, based on the simulation result data 13, one or more causal relationships, each indicating that one attribute is a cause of another attribute. The information processing apparatus 10 determines, based on the detected causal relationships, a cause attribute that indicates a cause for a target attribute indicating an evaluation of the space, and outputs the information 16 corresponding to the cause attribute.

Accordingly, designing another spatial design that has a possibility of improving an attribute value of the target attribute is supported. Thus, even when a user does not possess sufficient knowledge specific to a target space (for example, a trend of human flow in a particular type of facility), the user is able to explore a suitable spatial design with a small number of trials. In addition, exhaustive testing of a large number of spatial designs that are slightly different from each other is unneeded, and a burden of the behavior simulation executed by a computer is reduced.

The information 16 may include modification proposal information that indicates a method for modifying a space in order to change an attribute value of a cause attribute. Accordingly, a modification of a spatial design enables an attribute value of the target attribute to be changed indirectly through changes in attribute values of action attributes and environment attributes. Thus, the user is able to recognize a suitable spatial design with a small number of trials.

The information processing apparatus 10 may extract, from the simulation result data 13, attributes that are classified into any of the attribute types of goal, action, environment, external factor, and target, and may detect causal relationships among the extracted attributes. Accordingly, relationships among the attribute types of goal, action, environment, external factor, and target are clarified, and a logic by which the attribute value of the target attribute changes is presented. Thus, formulation of a spatial design that changes the attribute value of the target attribute is facilitated.

The information processing apparatus 10 may calculate causal effects between the target attribute and other attributes, and may determine cause attributes based on the detected causal relationships and the calculated causal effects. Accordingly, cause attributes that have a large influence on the target attribute are presented.

The simulation result data 13 may include records having different values of external factor attributes, and the information processing apparatus 10 may calculate causal effects for each value of each external factor attribute. Accordingly, the information processing apparatus 10 is able to distinguish between a cause attribute that has a large influence on the target attribute irrespective of external factors and a cause attribute that has a large influence on the target attribute only under a specific value of an external factor attribute, thereby providing the information 16 that is useful for spatial design.

After outputting the information 16, the information processing apparatus 10 may accept spatial information that has been modified and may execute the behavior simulation by using the modified spatial information. Accordingly, the user is able to confirm an effect of a design change in accordance with the information 16.

### Second Embodiment

Next, a second embodiment will be described.

An information processing apparatus 100 of the second embodiment executes a human behavior simulation using an agent-based model. As one example, the information processing apparatus 100 simulates passenger behavior in an airport terminal building for a purpose of improving a satisfaction degree of passengers before boarding. The information processing apparatus 100 may be a client apparatus or may be a server apparatus. The information processing apparatus 100 may also be referred to as a computer or as a simulation apparatus. The information processing apparatus 100 corresponds to the information processing apparatus 10 of the first embodiment.

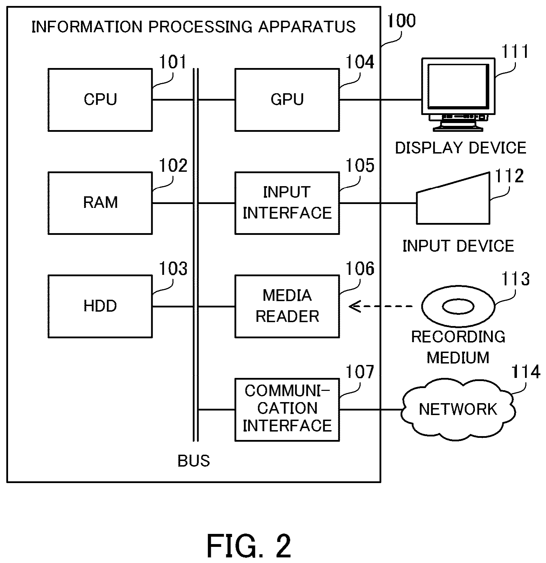

FIG. 2 illustrates a hardware example of the information processing apparatus of the second embodiment.

The information processing apparatus 100 includes a central processing unit (CPU) 101, a random access memory (RAM) 102, a hard disk drive (HDD) 103, a graphics processing unit (GPU) 104, an input interface 105, a media reader 106, and a communication interface 107, which are connected to a bus. The CPU 101 corresponds to the processing unit 12 of the first embodiment. The RAM 102 or the HDD 103 corresponds to the storing unit 11 of the first embodiment.

The CPU 101 is a processor that executes instructions of a program. The CPU 101 loads into the RAM 102 programs and data stored in the HDD 103 and executes the programs. The information processing apparatus 100 may include a plurality of processors.

The RAM 102 is a volatile semiconductor memory that temporarily stores programs executed by the CPU 101 and data used for computation by the CPU 101. The information processing apparatus 100 may include a type of volatile memory other than RAM.

The HDD 103 is nonvolatile storage that stores software programs such as an operating system (OS), middleware, and application software, and stores data. The information processing apparatus 100 may include another type of nonvolatile storage such as a flash memory or a solid state drive (SSD).

The GPU 104 performs image processing in cooperation with the CPU 101 and outputs images to a display device 111 connected to the information processing apparatus 100. The display device 111 is, for example, a cathode ray tube (CRT) display, a liquid crystal display, an organic electroluminescence (EL) display, or a projector. Another type of output device such as a printer may be connected to the information processing apparatus 100.

The GPU 104 may be used for general-purpose computing on the GPU (GPGPU). The GPU 104 may execute a program in response to an instruction from the CPU 101. The information processing apparatus 100 may include, as GPU memory, volatile semiconductor memory other than the RAM 102.

The input interface 105 receives input signals from an input device 112 connected to the information processing apparatus 100. The input device 112 is, for example, a mouse, a touch panel, or a keyboard. A plurality of input devices may be connected to the information processing apparatus 100.

The media reader 106 is a reading device that reads programs and data recorded on a recording medium 113. The recording medium 113 is, for example, a magnetic disk, an optical disk, or a semiconductor memory. The magnetic disk includes a flexible disk (FD) and an HDD. The optical disc includes a compact disc (CD) and a digital versatile disc (DVD). The media reader 106 copies programs and data read from the recording medium 113 to another recording medium such as the RAM 102 or the HDD 103. A read program may be executed by the CPU 101.

The recording medium 113 may be a portable recording medium. The recording medium 113 may be used for distribution of programs and data. The recording medium 113 and the HDD 103 may also be referred to as a computer-readable recording medium.

The communication interface 107 communicates with another information processing apparatus via a network 114. The communication interface 107 may be a wired communication interface connected to a wired communication device such as a switch or a router, or may be a wireless communication interface connected to a wireless communication device such as a base station or an access point.

Next, a simulation target space will be described.

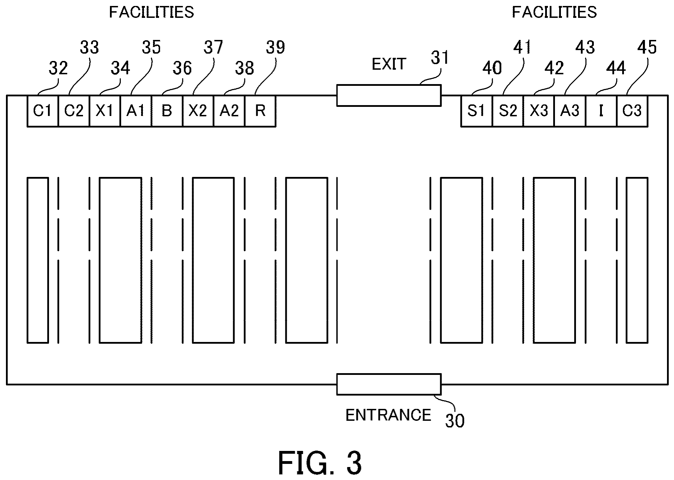

FIG. 3 illustrates an example of a design of an airport terminal building.

An airport terminal building to be simulated includes an entrance 30, an exit 31, and facilities 32 to 39 and 40 to 45. Passengers enter the airport terminal building from the entrance 30 and perform boarding procedures at a checkin counter. Passengers who have finished the boarding procedures exit from the exit 31 and head for a boarding gate. However, passengers may use the facilities 32 to 39 and 40 to 45.

The facilities 32, 33, and 45 are mobile-phone shops. The facilities 34, 37, and 42 are currency-exchange counters. The facilities 35, 38, and 43 are automatic teller machines (ATMs). The facility 36 is a bookstore. The facility 39 is a restaurant. The facilities 40 and 41 are souvenir shops. The facility 44 is an insurance agency. Passengers may take a rest in a lobby. The airport terminal building further includes guidance signs (not illustrated). The guidance signs indicate locations of the facilities 32 to 39 and 40 to 45. For example, the airport terminal building includes three guidance signs A, B, and C.

A plurality of agents representing passengers enters this virtual airport terminal building. Agents act autonomously according to a predetermined behavior algorithm. A facility that an agent desires to use is randomly assigned. An agent selects a destination facility, searches for a location of the destination facility by using a guidance sign in the vicinity of the current location, and walks toward the destination facility. When no guidance sign is present in the vicinity of the current location or when an area around a guidance sign is congested, information search may take time. When the destination facility is congested, a waiting time may occur. A waiting policy that indicates whether to join a queue is randomly assigned to agents.

The information processing apparatus 100 executes a human behavior simulation under a plurality of scenarios having different COVID-19 measures. A first scenario indicates a case in which no COVID-19 measure is implemented. A second scenario indicates a case in which social distancing is secured among passengers. A third scenario indicates a case in which the simultaneous occupancy of each facility is reduced. The COVID-19 measures are external factors that restrict actions of agents and are included in a spatial design.

The human behavior simulation of the second embodiment advances time in unit time increments (for example, one second) and tracks actions of each agent. For example, the information processing apparatus 100 executes the human behavior simulation by a method described in NPL 1 above. External factors such as installation of guidance signs and the COVID-19 measures influence actions of agents. Actions of agents influence environmental states such as congestion levels of facilities. The environmental states influence actions of agents.

Indicator values indicating a satisfaction degree for each agent are ultimately calculated from the human behavior simulation. Examples of indicators of the satisfaction degree include the number of facilities that were available for use and waiting time. A spatial design of the airport terminal building influences passenger satisfaction. Therefore, a user of the information processing apparatus 100 explores a spatial design in which passenger satisfaction increases.

However, one execution of the human behavior simulation only indicates passenger satisfaction for one spatial design and does not explain a causal chain from external factors to passenger satisfaction. Therefore, a user of the information processing apparatus 100 finds it not easy to determine a modification policy for the spatial design and may prepare a plurality of spatial designs in a trial-and-error manner based on knowledge specific to the airport terminal building.

Accordingly, the information processing apparatus 100 executes the human behavior simulation under a plurality of scenarios, analyzes simulation results, and determines causal relationships among external factors, passenger goals, passenger behaviors, environmental states, and passenger satisfaction. Then, based on the causal relationships, the information processing apparatus 100 presents an indirect control method that indirectly changes passenger satisfaction.

A user of the information processing apparatus 100 is able to modify a design of the airport terminal building based on presented information. The information processing apparatus 100 re-executes the human behavior simulation by using spatial information that has been modified and again determines the causal relationships among external factors, passenger goals, passenger behaviors, environmental states, and passenger satisfaction. Accordingly, the user is able to ascertain whether a modification policy is favorable and is able to efficiently explore a suitable spatial design.

Next, analysis of results of the human behavior simulation will be described.

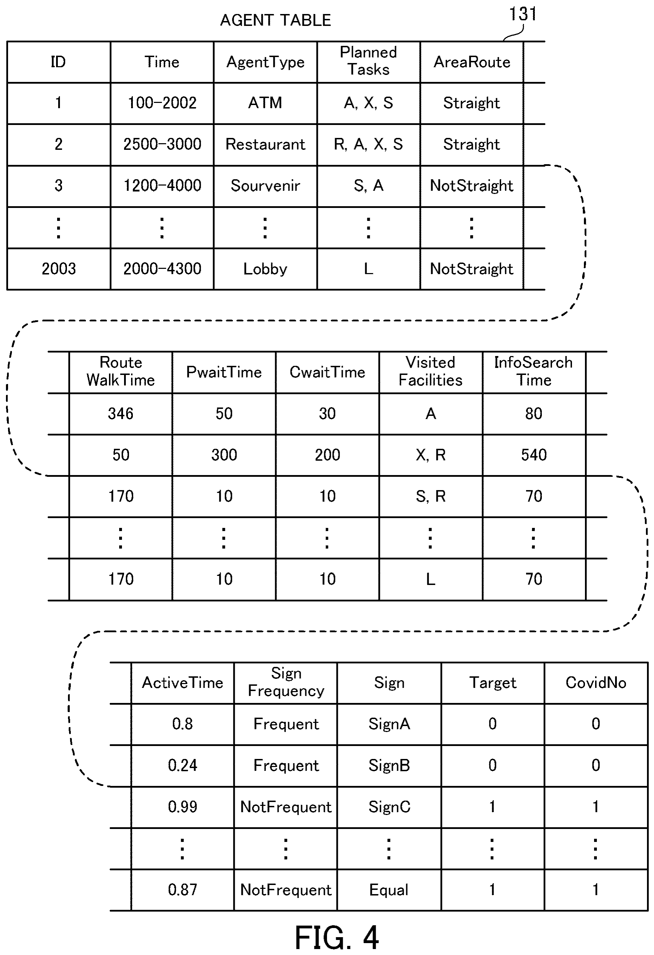

FIG. 4 illustrates an example of an agent table.

The information processing apparatus 100 stores an agent table 131. The agent table 131 includes a plurality of records corresponding to a plurality of agents. One record indicates an action result of an agent. Records of a plurality of scenarios having different COVID-19 measures are mixed in the agent table 131. Accordingly, the agent table 131 is generated by the human behavior simulation executed a plurality of times.

The agent table 131 includes a plurality of attributes. The attributes include ID, time (Time), agent type (Agent Type), planned tasks (Planned Tasks), and area route (Area Route). The attributes further include route walk time (Route Walk Time), total waiting time (Pwait Time), facility waiting time (Cwait Time), visited facilities (Visited Facilities), and information search time (Info Search Time). The attributes further include active time (Active Time), signage frequency (Sign Frequency), referenced signage (Sign), degree of achievement (Target), and COVID-19 measure (Covid No).

The records correspond to rows (tuples) of the agent table 131. The attributes correspond to columns of the agent table 131. Each of the plurality of records includes a plurality of attribute values corresponding to the above plurality of attributes.

The ID attribute is an identifier that identifies an agent. Even among different scenarios, the same ID is not used. The time attribute indicates a period during which an agent stayed in the airport terminal building and includes an entry time and an exit time. The time attribute is expressed, for example, as the number of seconds elapsed from the start of the simulation. For an agent, in order to be in time for a departure time of an airplane, a maximum exit time or a maximum staying time may be given.

The agent type attribute is a task having the highest priority for an agent. The planned tasks attribute is a set of tasks that an agent desires to execute. One task indicates use of one facility. One or more tasks are randomly assigned to an agent, and a highest-priority task is randomly selected from among the one or more tasks.

In the second embodiment, C may represent a mobile-phone shop, X a currency-exchange counter, A an ATM, B a bookstore, R a restaurant, S a souvenir shop, I an insurance agency, and L a lobby. The area route attribute indicates a tendency of a movement path when an agent moves to a destination facility and is randomly assigned to an agent. The area route attribute is either Straight, which follows a shortest path to the destination facility, or Not Straight, which follows a path slightly deviating from the shortest path.

The route walk time attribute is the time during which an agent walks toward a destination facility inside the airport terminal building, and is expressed, for example, in seconds. The total waiting time attribute is the time during which an agent is in a waiting state inside the airport terminal building. The total waiting time attribute includes time for standing in a queue at a facility, time for passing through the entrance or the exit, and time for viewing guidance signs, and is expressed, for example, in seconds.

The facility waiting time attribute is the time, among the total waiting time, for standing in a queue at a facility, and is expressed, for example, in seconds. The visited facilities attribute indicates facilities that an agent actually used during a period of stay in the airport terminal building. The visited facilities attribute may be a subset of the planned tasks attribute. An agent may be unable to use some of the facilities indicated by the planned tasks attribute due to a lack of time or congestion. The information search time attribute is the time taken for an agent to learn the location of a destination facility, and is expressed, for example, in seconds.

The active time attribute is the time during which an agent was active in the airport terminal building. Time spent waiting is excluded from the active time attribute. The active time attribute is expressed, for example, as a ratio to the staying time. The signage frequency attribute is the frequency at which an agent viewed guidance signs. The signage frequency attribute is either Frequent, which indicates that the number of views of guidance signs exceeds a threshold (for example, twenty-five), or Not Frequent, which indicates that the number of views of guidance signs does not exceed the threshold.

The referenced signage attribute indicates the guidance sign most frequently viewed by an agent. The referenced signage attribute is, for example, guidance sign A, guidance sign B, guidance sign C, or Equal. Equal indicates that differences among reference counts for the guidance signs are less than a threshold. The degree of achievement attribute indicates the ratio of completed tasks among the planned tasks attribute and is used as an indicator of satisfaction of an agent. The degree of achievement attribute is 0 when the ratio of completed tasks is less than 50%, and is 1 when the ratio of completed tasks is 50% or more.

The COVID-19 measure attribute identifies a scenario. Airport terminal buildings having different COVID-19 measures represent different spatial designs. 0 indicates that no COVID-19 measure is implemented. 1 indicates adoption of social distancing as a COVID-19 measure. 2 indicates adoption of a capacity limit for facilities as a COVID-19 measure.

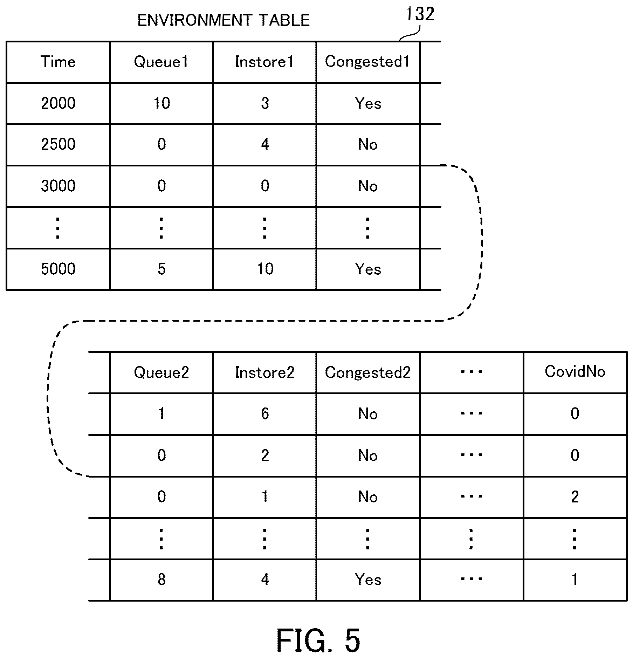

FIG. 5 illustrates an example of an environment table.

The information processing apparatus 100 stores an environment table 132. The environment table 132 indicates a facility state at each time during the human behavior simulation. One record indicates a facility state at one time. Records of a plurality of scenarios having different COVID-19 measures are mixed in the environment table 132. Accordingly, in addition to the agent table 131, the environment table 132 is generated by the human behavior simulation executed a plurality of times.

The environment table 132 includes a plurality of attributes. The attributes include time (Time), a plurality of queue lengths (Queue), a plurality of facility headcounts (Instore), a plurality of congestion flags (Congested), and a COVID-19 measure (Covid No). The records correspond to rows (tuples) of the environment table 132. The attributes correspond to columns of the environment table 132. Each of the plurality of records includes a plurality of attribute values corresponding to the above plurality of attributes.

The time attribute is the relative time from the start of the simulation and is expressed, for example, in seconds. Each queue length attribute is the length of a waiting queue at a facility, that is, the number of agents standing in the queue. Each facility headcount attribute is the number of agents present in a facility. Each congestion flag attribute is a flag that indicates whether a facility is congested. For example, when the queue length attribute is less than or equal to a threshold, a facility is not congested, and when the queue length attribute exceeds the threshold, the facility is mixed. The queue length, facility headcount, and congestion flag attributes are provided for each facility. The COVID-19 measure attribute identifies a scenario, as in the agent table 131.

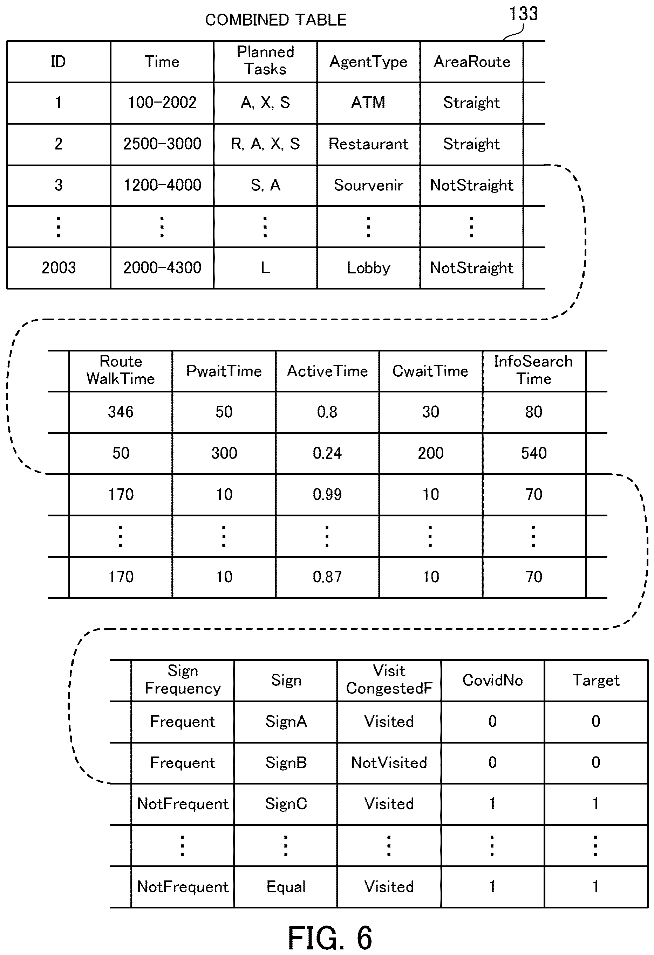

FIG. 6 illustrates an example of a combined table.

The information processing apparatus 100 generates a combined table 133 by joining the agent table 131 and the environment table 132. The information processing apparatus 100 selects one record from the agent table 131 and searches the environment table 132 for a record that has a time attribute value corresponding to that of the selected record. The information processing apparatus 100 adds to the selected record attribute values contained in the retrieved record or values converted from the attribute values contained in the retrieved record. The information processing apparatus 100 may delete some attribute values from the selected record and may delete some attribute values from the retrieved record.

In the example of FIG. 6, the visited facilities attribute is deleted from the agent table 131, and a congested-facility visit attribute (Visit Congested F) is added to the agent table 131. The congested-facility visit attribute is a flag that indicates whether an agent used a facility that was congested. When an agent used a facility that was congested, the congested-facility visit attribute is Visited. When an agent did not use a facility that was congested, the congested-facility visit attribute is Not Visited.

The information processing apparatus 100 searches the environment table 132 for records that have values of the time attribute within the period of stay of an agent. The information processing apparatus 100 extracts, from the retrieved records, values of the congestion flag attributes for the facilities indicated by the visited facilities attribute. When a visited facility was congested, the information processing apparatus 100 sets the congested-facility visit attribute to Visited. When a visited facility was not congested, the information processing apparatus 100 sets the congested-facility visit attribute to Not Visited.

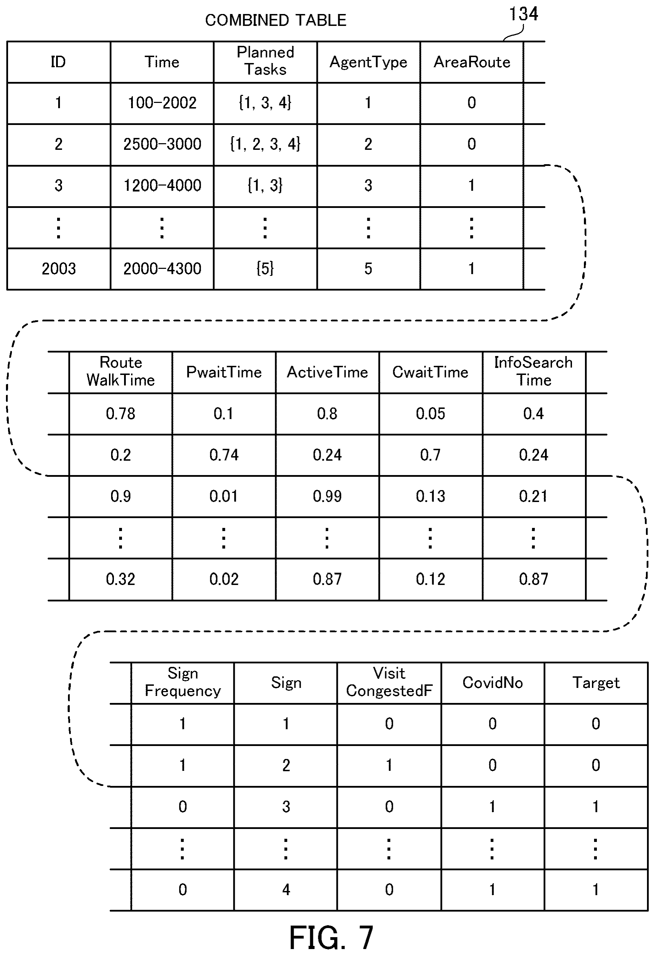

FIG. 7 illustrates an example of a normalized combined table.

The information processing apparatus 100 converts the combined table 133 into a combined table 134 by normalizing, for each attribute, attribute values included in the combined table 133. Facilities indicated by the planned tasks attribute and the agent type attribute are converted into integers. For example, an ATM is 1, a restaurant is 2, a souvenir shop is 3, a currency-exchange counter is 4, and a lobby is 5.

Flags indicated by the area route, signage frequency, and congested-facility visit attributes are converted to 0 or 1. For example, for the area route attribute, Straight is 0 and Not Straight is 1. For the signage frequency attribute, Frequent is 1 and Not Frequent is 0. For the congested-facility visit attribute, Visited is 0 and Not Visited is 1. The referenced signage attribute is converted into an integer; for example, guidance sign A is 1, guidance sign B is 2, guidance sign C is 3, and Equal is 4. The route walk time, total waiting time, facility waiting time, and information search time attributes are scaled, for each attribute, to values between 0 and 1, inclusive. Such normalization improves the accuracy of subsequent analysis.

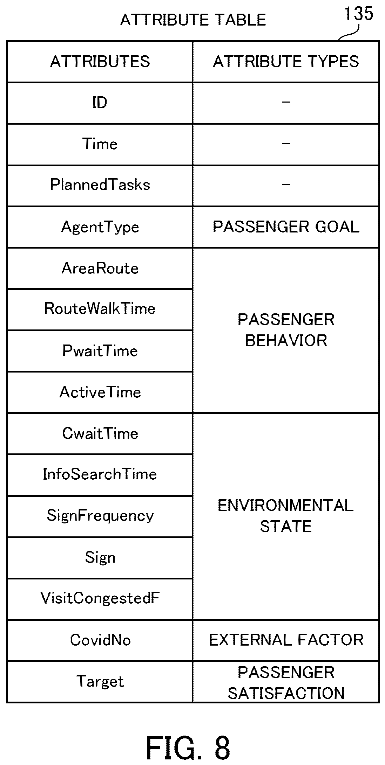

FIG. 8 illustrates an example of an attribute table.

The information processing apparatus 100 classifies attributes included in the combined table 134 into five attribute types: passenger goal, passenger behavior, environmental state, external factor, and passenger satisfaction. Passenger satisfaction may also be referred to as passenger experience. However, attributes that are not classified into any of the attribute types may be present. The passenger satisfaction attribute corresponds to the target attribute of the first embodiment.

The passenger goal attribute is an attribute that indicates a goal given to an agent. The passenger behavior attribute is an attribute that indicates a measurement value of a behavior autonomously selected by an agent. The environmental state attribute is an attribute that indicates a measurement value of an interaction between an agent and an environment. The external factor attribute is an attribute that indicates a constraint imposed on an agent by an environment. The passenger satisfaction attribute is an attribute that indicates an estimated value of a degree of satisfaction of an agent and represents an evaluation of a spatial design of the airport terminal building.

For some or all of the attributes, attribute types may be specified by the user. The information processing apparatus 100 may determine attribute types from the names of attributes. For example, the information processing apparatus 100 refers to a knowledge database indicating relationships between attribute names and attribute types and classifies the attributes included in the combined table 134 into the five attribute types.

The information processing apparatus 100 may determine an attribute type based on an algorithm of the human behavior simulation. For example, the information processing apparatus 100 classifies, as the passenger goal attribute, an attribute corresponding to a variable of an agent whose value is set randomly in advance. The information processing apparatus 100 classifies, as the passenger behavior attribute, an attribute corresponding to a variable of an agent whose value changes during the simulation. The information processing apparatus 100 classifies, as the environmental state attribute, an attribute corresponding to a variable concerning a facility. The information processing apparatus 100 classifies, as the external factor attribute, an attribute corresponding to a variable indicating a design of the airport terminal building. The information processing apparatus 100 classifies, as the passenger satisfaction attribute, an attribute corresponding to a variable whose value is calculated after the fact from an action result.

The information processing apparatus 100 generates an attribute table 135 that indicates correspondences between attributes and attribute types. In the example of FIG. 8, the agent type attribute is classified as passenger goal. The area route attribute, the route walk time attribute, the total waiting time attribute, and the active time attribute are classified as passenger behavior. The facility waiting time attribute, the information search time attribute, the signage frequency attribute, the referenced signage attribute, and the congested-facility visit attribute are classified as environmental state. The COVID-19 measure attribute is classified as an external factor. The degree of achievement attribute is classified as passenger satisfaction.

The information processing apparatus 100 extracts, from the combined table 134, attribute values of attributes that are classified into any of the five attribute types of passenger goal, passenger behavior, environmental state, external factor, and passenger satisfaction. The information processing apparatus 100 executes a causal discovery method on a plurality of records that include the extracted attribute values, thereby detecting causal relationships among a plurality of attributes. Attributes subject to analysis are the five attribute types of passenger goal, passenger behavior, environmental state, external factor, and passenger satisfaction; however, the information processing apparatus 100 may perform causal analysis that includes attributes other than the five attribute types.

Examples of algorithms for the causal discovery method include greedy fast causal inference (GFCI), direct linear non-Gaussian acyclic model (DirectLiNGAM), and the Peter and Clark (PC) algorithm.

GFCI is described, for example, in the following non-patent literature: Juan Miguel Ogarrio, Peter Spirtes and Joe Ramsey, "A Hybrid Causal Search Algorithm for Latent Variable Models", Proceedings of the 8th International Conference on Probabilistic Graphical Models (PGM 2016), pp. 368-379, September 2016.

DirectLiNGAM is described, for example, in the following non-patent literature: Shohei Shimizu, Takanori Inazumi, Yasuhiro Sogawa, Aapo Hyvarinen, Yoshinobu Kawahara, Takashi Washio, Patrik O. Hoyer, and Kenneth Ballen, "DirectLiNGAM: A Direct Method for Learning a Linear Non-Gaussian Structural Equation Model", Journal of Machine Learning Research, Volume 12, pp. 1225-1248, April 2011.

The PC algorithm is described, for example, in the following non-patent literature: Peter Spirtes and Clark Glymour, "An Algorithm for Fast Recovery of Sparse Causal Graphs", Social Science Computer Review, Volume 9, Issue 1, pp. 62-72, April 1991.

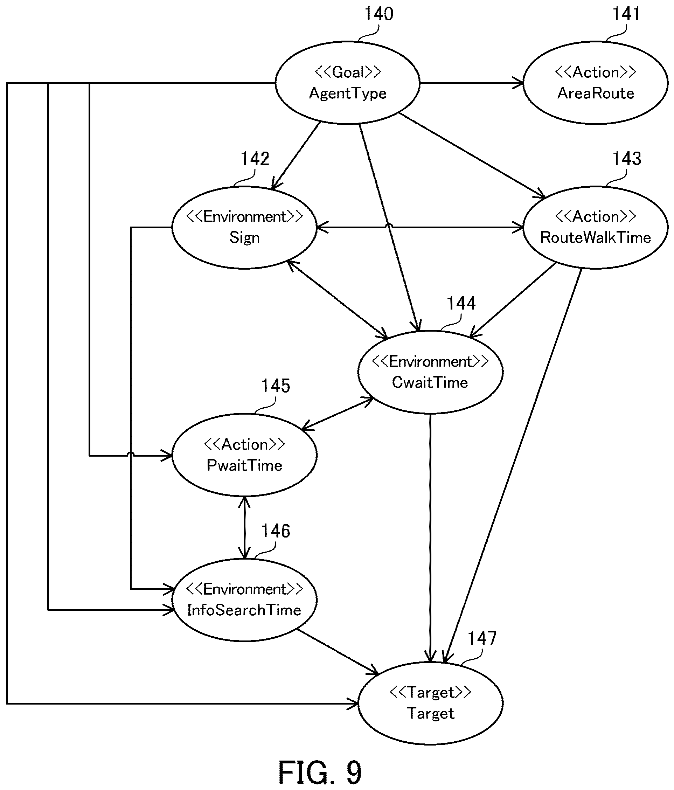

FIG. 9 illustrates an example of a causal graph.

The information processing apparatus 100 generates a causal graph by executing a causal discovery method. The causal graph includes a plurality of nodes, each representing an attribute, and a plurality of edges, each representing a causal relationship between two attributes. An attribute name and an attribute type are indicated on each node. Each edge has a direction from a cause attribute toward a result attribute.

The causal graph illustrated in FIG. 9 includes nodes 140, 141, 142, 143, 144, 145, 146, and 147. The node 140 represents the agent type attribute, which is classified as passenger goal. The node 141 represents the area route attribute, which is classified as passenger behavior. The node 142 represents the referenced signage attribute, which is classified as environmental state. The node 143 represents the route walk time attribute, which is classified as passenger behavior. The node 144 represents the facility waiting time attribute, which is classified as environmental state. The node 145 represents the total waiting time attribute, which is classified as passenger behavior. The node 146 represents the information search time attribute, which is classified as environmental state. The node 147 represents the degree of achievement attribute, which is classified as passenger satisfaction.

There are edges indicating causal relationships from the node 140 to the nodes 141, 142, 143, 144, 145, 146, and 147. There are edges indicating causal relationships from the node 142 to the nodes 143, 144, and 146. There are edges indicating causal relationships from the node 143 to the nodes 142, 144, and 147. There are edges indicating causal relationships from the node 144 to the nodes 142, 145, and 147. There are edges indicating causal relationships from the node 145 to the nodes 144 and 146. There are edges indicating causal relationships from the node 146 to the nodes 145 and 147.

The causal graph indicates causal relationships among the attribute types of passenger goal, passenger behavior, environmental state, external factor, and passenger satisfaction. A typical causal graph indicates a causal chain in which the passenger goal influences the passenger satisfaction through the passenger behavior, the environmental state, and the external factor. Accordingly, a causal graph annotated with attribute types constitutes useful information for considering improvement measures that increase passenger satisfaction.

In addition, the information processing apparatus 100 calculates causal effects among attributes from the combined table 134, separately from the causal graph, using the causal discovery method. A causal effect is an index indicating the strength of a causal relationship and represents the ratio of a change in an attribute value of a result attribute to a change in an attribute value of a cause attribute. When an attribute value of the cause attribute increases and an attribute value of the result attribute increases, the causal effect is positive. When an attribute value of the cause attribute decreases and an attribute value of the result attribute increases, the causal effect is negative. The larger the magnitude of the causal effect (the absolute value of the causal effect) is, the stronger the causal relationship is.

The information processing apparatus 100 calculates causal effects for the passenger satisfaction attribute by treating, as causes, attributes classified as passenger goal, passenger behavior, environmental state, or external factor, and by treating the passenger satisfaction attribute as the result. However, the information processing apparatus 100 may calculate causal effects between the passenger satisfaction attribute and all attributes other than the passenger satisfaction attribute. In calculating the causal effects, the information processing apparatus 100 classifies the records included in the combined table 134 into a plurality of scenarios based on values of the external factor attribute. The information processing apparatus 100 calculates the causal effects separately for each scenario because the strength of a causal relationship may differ depending on the value of the external factor attribute. In generating the causal graph, the information processing apparatus 100 need not classify the records into a plurality of scenarios.

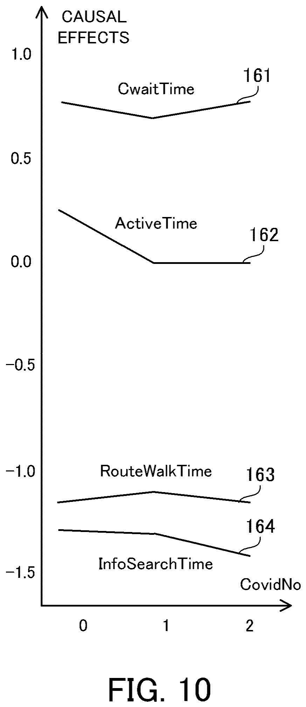

FIG. 10 illustrates an example of calculation of causal effects for each scenario.

In the graph of FIG. 10, the horizontal axis represents values of the COVID-19 measure attribute, and the vertical axis represents causal effects. The records of the combined table 134 are classified into three scenarios. FIG. 10 illustrates only those attributes whose causal effects have large absolute values.

A curve 161 indicates the causal effect between facility waiting time and the degree of achievement in the three scenarios. A curve 162 indicates the causal effect between active time and the degree of achievement in the three scenarios. A curve 163 indicates the causal effect between route walk time and the degree of achievement in the three scenarios. A curve 164 indicates the causal effect between information search time and the degree of achievement in the three scenarios.

The information processing apparatus 100 identifies, on the basis of the causal graph and the causal effects, primary causes that exert a large influence on passenger satisfaction from among a plurality of attributes included in the combined table 134. First, the information processing apparatus 100 searches the causal graph for edges that are directly connected to the node representing passenger satisfaction and whose terminal end is the node representing passenger satisfaction. The information processing apparatus 100 determines the attribute at the source node of each retrieved edge as a direct cause with respect to passenger satisfaction.

In this case, a plurality of direct causes may be detected. The information processing apparatus 100 identifies, on the basis of the causal effects, primary causes from among the plurality of direct causes. The information processing apparatus 100 preferentially selects, as primary causes, direct causes having large absolute values of the causal effects. The information processing apparatus 100 may narrow the primary causes down to one, or may allow two or more primary causes. The information processing apparatus 100 may identify the primary causes separately for each scenario.

For example, the information processing apparatus 100 selects, as primary causes, direct causes for which the absolute values of the corresponding causal effects exceed a threshold. As another example, the information processing apparatus 100 selects, as primary causes, a fixed number of direct causes in descending order of the absolute values of the corresponding causal effects. The information processing apparatus 100 may perform the above selection separately for direct causes having positive causal effects and for direct causes having negative causal effects.

The information processing apparatus 100 may determine, as scenario-independent primary causes, direct causes that satisfy the above conditions for all scenarios. In this case, the information processing apparatus 100 may output information indicating that the primary causes are scenario-independent. On the other hand, the information processing apparatus 100 may determine, as scenario-dependent primary causes, direct causes that satisfy the above conditions for only some scenarios. In this case, the information processing apparatus 100 may output information indicating that the primary causes are effective only in specific scenarios.

For example, from the causal graph illustrated in FIG. 9, the information processing apparatus 100 identifies, as direct causes, the agent type attribute represented by the node 140, the route walk time attribute represented by the node 143, the facility waiting time attribute represented by the node 144, and the information search time attribute represented by the node 146. Based on the causal effects illustrated in FIG. 10, the information processing apparatus 100 selects, as primary causes, the facility waiting time attribute and the information search time attribute from among the agent type attribute, the route walk time attribute, the facility waiting time attribute, and the information search time attribute.

The information processing apparatus 100 outputs information regarding the identified primary causes as explanatory information that explains the reason for the computed attribute value of passenger satisfaction. The explanatory information may include attribute names and attribute types of the identified primary causes. The explanatory information may further include a causal graph indicating relationships among passenger goals, passenger behaviors, environmental states, external factors, and passenger satisfaction. The explanatory information may further include information indicating causal effects between passenger satisfaction and the other attributes.

Further, the information processing apparatus 100 may output, in the explanatory information, improvement measures for changing attribute values of the primary causes. These improvement measures constitute an indirect control method that indirectly changes the attribute value of passenger satisfaction. To propose the improvement measures, the information processing apparatus 100 may maintain a knowledge database that associates attributes with methods for changing attribute values of the attributes.

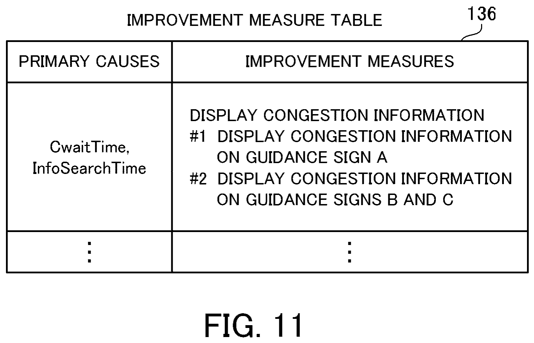

FIG. 11 illustrates an example of an improvement measure table.

The information processing apparatus 100 stores an improvement measure table 136. The improvement measure table 136 associates primary causes with improvement measures. An improvement measure indicates a design change of the airport terminal building that has a possibility of changing an attribute value of a primary cause. An improvement measure may correspond to addition of an external factor.

As one example of an improvement measure for changing an attribute value of the facility waiting time attribute or the information search time attribute, congestion information indicating current congestion levels of respective ones of a plurality of facilities is displayed on guidance signs. Display of the congestion information has a possibility of reducing temporal bias and inter-facility bias in congestion levels and decreasing the average facility waiting time. Display of the congestion information also has a possibility of reducing the time and effort of searching for a facility that is not congested, thereby decreasing the information search time.

As one example of a display form of the congestion information, a display form in which the congestion information is displayed only on the guidance sign A among the guidance signs A, B, and C, and a display form in which the congestion information is displayed only on the guidance signs B and C among the guidance signs A, B, and C, may be considered. When the human behavior simulation is executed with such different display forms, a signage information attribute (Sign No) is added as an external factor attribute. In this case, scenarios are distinguished by combinations of values of the COVID-19 measure attribute and the signage information attribute.

After outputting the explanatory information, the information processing apparatus 100 accepts, from a user, spatial information that has been modified. For example, the information processing apparatus 100 accepts, from a user, spatial information in which the display content of guidance signs has been changed. The information processing apparatus 100 re-executes the human behavior simulation by using the modified spatial information. Then, the information processing apparatus 100 analyzes execution results of the re-simulation and outputs the explanatory information again.

A user is able to understand an effect of modification to the spatial information by checking the causal relationships among attributes after the re-simulation. As described above, instead of first accepting all candidate spatial information and exhaustively executing the human behavior simulation, the information processing apparatus 100 iteratively outputs the explanatory information and acquires the modified spatial information. Accordingly, a user is able to efficiently explore a spatial design in which passenger satisfaction increases.

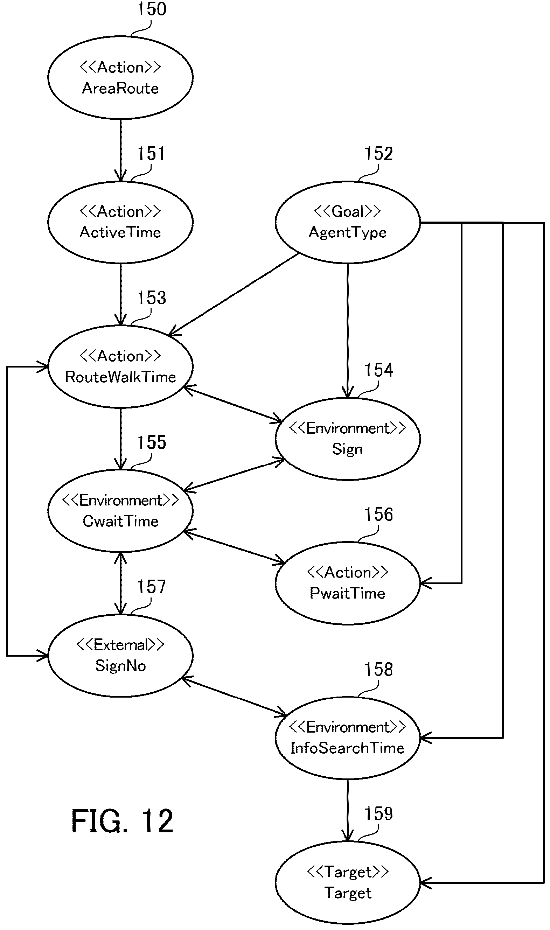

FIG. 12 illustrates an example of a causal graph after a re-simulation.

The information processing apparatus 100 generates an updated causal graph by executing a causal discovery method on the re-simulation results. The causal graph illustrated in FIG. 12 includes nodes 150, 151, 152, 153, 154, 155, 156, 157, 158, and 159.

The node 150 represents the area route attribute, which is classified as passenger behavior. The node 151 represents the active time attribute, which is classified as passenger behavior. The node 152 represents the agent type attribute, which is classified as passenger goal. The node 153 represents the route walk time attribute, which is classified as passenger behavior. The node 154 represents the referenced signage attribute, which is classified as environmental state. The node 155 represents the facility waiting time attribute, which is classified as environmental state. The node 156 represents the total waiting time attribute, which is classified as passenger behavior. The node 157 represents the signage information attribute (Sign No), which is an external factor attribute. The node 158 represents the information search time attribute, which is classified as environmental state. The node 159 represents the degree of achievement attribute, which is classified as passenger satisfaction.

There is an edge indicating a causal relationship from the node 150 to the node 151. There is an edge indicating a causal relationship from the node 151 to the node 153. There are edges indicating causal relationships from the node 152 to the nodes 153, 154, 156, 158, and 159. There are edges indicating causal relationships from the node 153 to the nodes 154, 155, and 157.

There are edges indicating causal relationships from the node 154 to the nodes 153 and 155. There are edges indicating causal relationships from the node 155 to the nodes 154, 156, and 157. There is an edge indicating a causal relationship from the node 156 to the node 155. There are edges indicating causal relationships from the node 157 to the nodes 153, 155, and 158. There are edges indicating causal relationships from the node 158 to the nodes 157 and 159. Unlike the causal graph illustrated in FIG. 9, the re-simulation results indicate that the facility waiting time attribute is no longer a direct cause of the degree of achievement attribute.

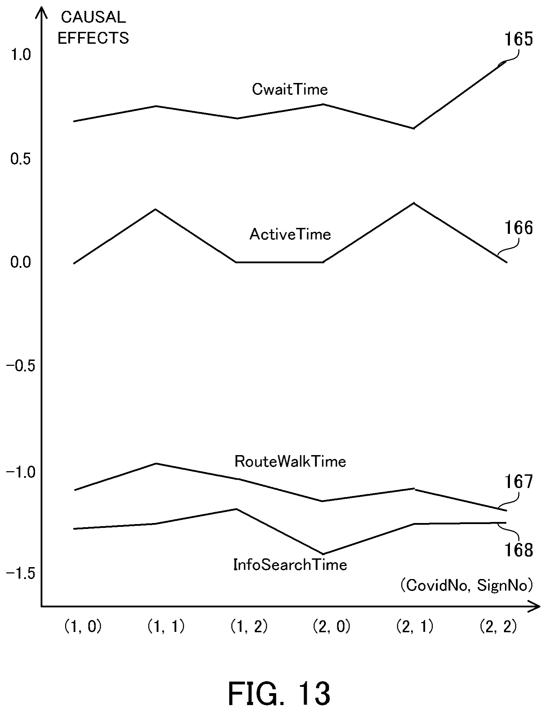

FIG. 13 illustrates an example of calculation of causal effects after the re-simulation.

In the graph of FIG. 13, the horizontal axis represents scenarios, and the vertical axis represents causal effects. Six scenarios are defined by combinations of values of the COVID-19 measure attribute and the signage information attribute. A curve 165 indicates the causal effect between the facility waiting time and the degree of achievement in the six scenarios. A curve 166 indicates the causal effect between the active time and the degree of achievement in the six scenarios. A curve 167 indicates the causal effect between the route walk time and the degree of achievement in the six scenarios. A curve 168 indicates the causal effect between the information search time and the degree of achievement in the six scenarios.

The information processing apparatus 100 may again identify primary causes and may output explanatory information based on the causal graph after the re-simulation and the causal effects. Next, a flow of the simulation executed by the information processing apparatus 100 of the second embodiment will be further described.

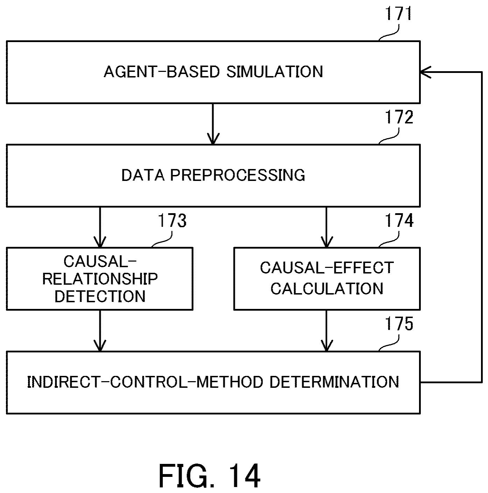

FIG. 14 illustrates an example of a flow of a human behavior simulation.

The information processing apparatus 100 executes an agent-based simulation 171 for a plurality of scenarios. The information processing apparatus 100 performs data preprocessing 172 on an agent table and an environment table generated by the agent-based simulation 171, thereby generating a combined table. The data preprocessing 172 includes classifying a plurality of attributes included in the combined table into attribute types of passenger goal, passenger behavior, environmental state, external factor, and passenger satisfaction.

The information processing apparatus 100 performs causal-relationship detection 173 on the combined table to generate a causal graph. The information processing apparatus 100 also performs causal-effect calculation 174 on the combined table to calculate causal effects between passenger satisfaction and other attributes. The causal-relationship detection 173 and the causal-effect calculation 174 may be executed in either order.

The information processing apparatus 100 executes indirect-control-method determination 175 based on the causal graph and the causal effects. The indirect-control-method determination 175 includes identifying primary causes that have a large influence on passenger satisfaction. The indirect-control-method determination 175 also includes, as an indirect control method, searching for improvement measures that change attribute values of the primary causes. The information processing apparatus 100 outputs explanatory information that includes information indicating the primary causes and the improvement measures. In response to the explanatory information, when modified spatial information is entered, the information processing apparatus 100 re-executes the agent-based simulation 171.

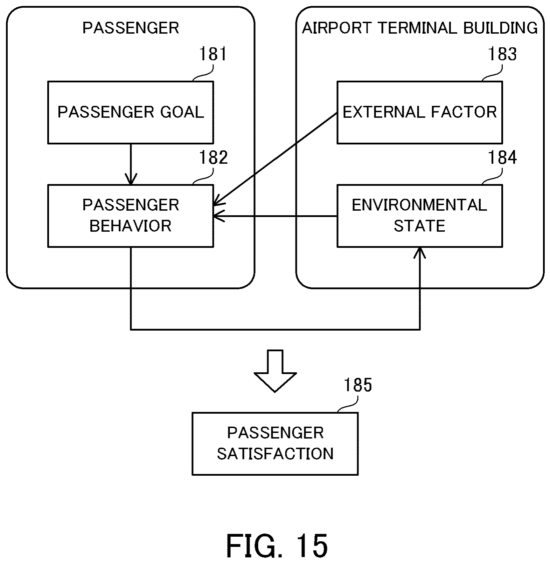

FIG. 15 illustrates an example of relationships among attribute types.

In the human behavior simulation, a passenger goal 181 is given to an agent. The agent acts with an aim of achieving the passenger goal 181. Therefore, the passenger goal 181 influences passenger behavior 182. In addition, as a design of the airport terminal building, an external factor 183 is defined. The external factor 183 influences the passenger behavior 182.

As a result of the passenger behavior 182, congestion levels of facilities change. Therefore, the passenger behavior 182 influences an environmental state 184. In addition, congestion levels of facilities may change selection of actions of passengers. Therefore, the environmental state 184 influences the passenger behavior 182. In this manner, the passenger behavior 182 and the environmental state 184 vary while mutually influencing each other over time. Ultimately, passenger satisfaction 185 is determined based on the entirety of passenger behavior 182 and environmental state 184.

Next, the functions and processing procedures of the information processing apparatus 100 will be described.

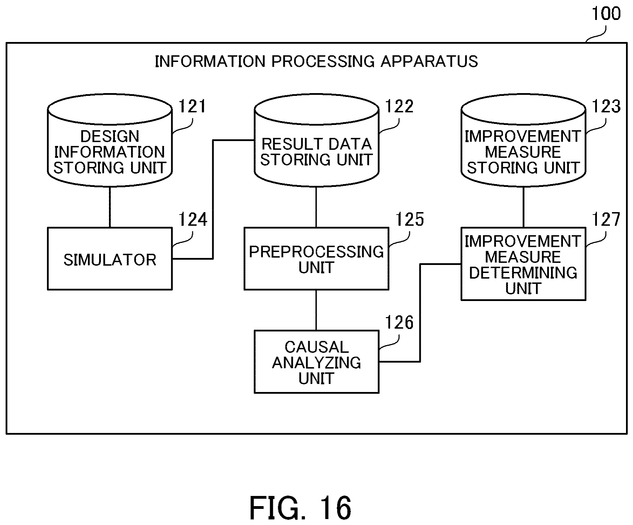

FIG. 16 is a block diagram illustrating a functional example of the information processing apparatus.

The information processing apparatus 100 includes a design information storing unit 121, a result data storing unit 122, an improvement measure storing unit 123, a simulator 124, a preprocessing unit 125, a causal analyzing unit 126, and an improvement measure determining unit 127. The design information storing unit 121, the result data storing unit 122, and the improvement measure storing unit 123 are implemented, for example, by using the RAM 102 or the HDD 103. The simulator 124, the preprocessing unit 125, the causal analyzing unit 126, and the improvement measure determining unit 127 are implemented, for example, by using the CPU 101 and a program.

The design information storing unit 121 stores spatial information of the airport terminal building. The spatial information includes a shape of the airport terminal building, locations of facilities, and locations of guidance signs. The spatial information may include behavior rules that restrict actions of agents, such as COVID-19 measures. Parameters included in the spatial information may correspond to external factors.

The result data storing unit 122 stores results of the human behavior simulation. For example, the result data storing unit 122 stores the above-described agent table 131 and environment table 132. The improvement measure storing unit 123 stores, for each attribute, improvement measures that have a possibility of changing attribute values. For example, the improvement measure storing unit 123 stores the above-described improvement measure table 136.

Based on the spatial information stored in the design information storing unit 121, the simulator 124 executes an agent-based human behavior simulation. For example, the simulator 124 generates a predetermined number of agents and randomly sets, for each agent, parameter values such as an arrival time, tasks, and a facility-waiting policy. The simulator 124 moves agents in a virtual space in accordance with the set parameter values. The simulator 124 stores results of the human behavior simulation in the result data storing unit 122.

The preprocessing unit 125 performs preprocessing on result data stored in the result data storing unit 122. The preprocessing unit 125 joins the agent table 131 and the environment table 132 to generate the combined table 133, and normalizes the combined table 133 to generate the combined table 134. The preprocessing unit 125 classifies a plurality of attributes included in the combined table 134 into the five attribute types and generates the attribute table 135.

The causal analyzing unit 126 executes a causal discovery method for the combined table 134 generated by the preprocessing unit 125. Thus, the causal analyzing unit 126 generates a causal graph indicating causal relationships among the five attribute types and calculates causal effects between the passenger satisfaction attribute and other attributes.

The improvement measure determining unit 127 searches, from the causal graph generated by the causal analyzing unit 126, direct causes that are connected to the passenger satisfaction attribute by a single causal relationship. The improvement measure determining unit 127 identifies, among the direct causes, primary causes having large absolute causal effects on the passenger satisfaction attribute. The improvement measure determining unit 127 searches the improvement measure storing unit 123 for improvement measures corresponding to the primary causes.

Accordingly, the improvement measure determining unit 127 generates explanatory information indicating an analysis of simulation results. The explanatory information includes, for example, information that identifies the primary causes and text indicating the retrieved improvement measures. The improvement measure determining unit 127 outputs the explanatory information. The improvement measure determining unit 127 may store the explanatory information in nonvolatile storage, may display the explanatory information on the display device 111, or may transmit the explanatory information to another information processing apparatus.

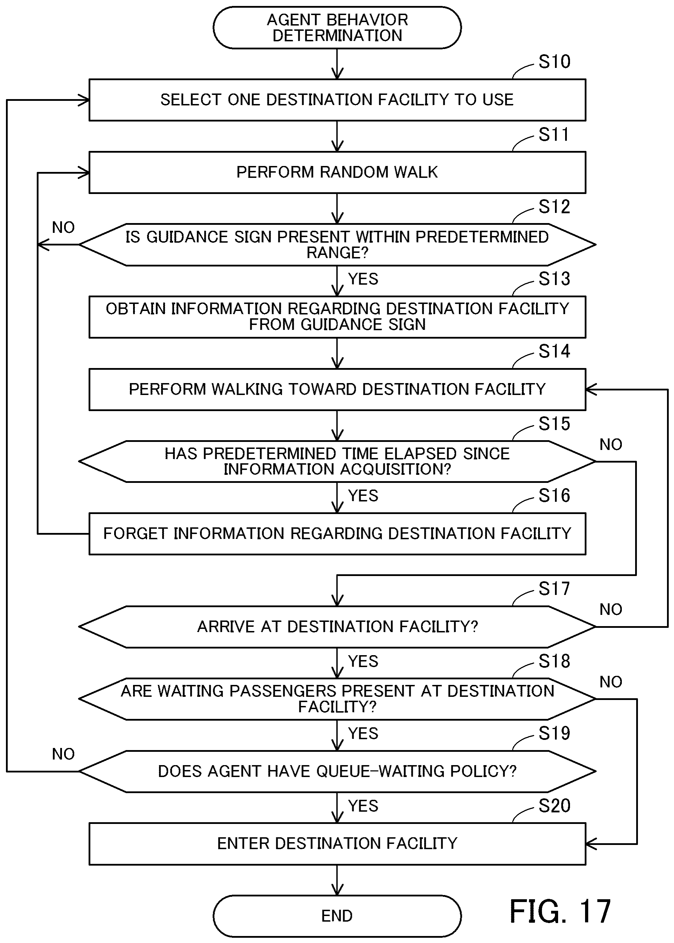

FIG. 17 is a flowchart illustrating an example of a procedure for agent behavior determination.

The simulator 124 determines behavior of an agent in accordance with this flowchart.

(S10) An agent selects one destination facility to use from among the planned tasks.

(S11) The agent performs a random walk because the location of the destination facility is unknown.

(S12) The agent determines whether a guidance sign is present within a predetermined range of the current location. When a guidance sign is present, processing proceeds to step S13. When a guidance sign is not present, processing returns to step S11, and the agent continues the random walk.

(S13) The agent acquires, from the guidance sign, information indicating the location of the destination facility.

(S14) The agent walks toward the destination facility based on the acquired information regarding the destination facility. Whether movement follows a shortest path depends on a setting value assigned to the agent.

(S15) The agent determines whether a predetermined time has elapsed since the latest time at which the information indicating the location of the destination facility was acquired. When the predetermined time has elapsed since acquisition of the information, processing proceeds to step S16. When the predetermined time has not yet elapsed since acquisition of the information, processing proceeds to step S17.

(S16) The agent forgets the acquired information regarding the destination facility. Processing then returns to step S11, and the agent performs a random walk from the current location.

(S17) The agent determines whether the destination facility has been reached. When the destination facility has been reached, processing proceeds to step S18. When the destination facility has not been reached, processing returns to step S14, and the agent continues walking toward the destination facility.

(S18) The agent determines whether waiting passengers are present at the destination facility that has been reached, that is, whether the queue length is 1 or greater. When waiting passengers are present, processing proceeds to step S19. When waiting passengers are not present, processing proceeds to step S20.

(S19) The agent determines whether a setting value indicating a queue-waiting policy has been given. When the agent has the queue-waiting policy, processing proceeds to step S20. When the agent does not have the queue-waiting policy, processing returns to step S10, and the agent abandons use of the currently selected destination facility and selects another destination facility.

(S20) The agent enters the destination facility and uses the destination facility. When the agent has joined the queue, the agent is permitted to enter the inside of the destination facility when a vacancy occurs while the agent is at the head of the queue. The usage time depends on the type of the facility. After the facility is used, when an unused facility remains in the planned tasks and a scheduled exit time has not yet arrived, the agent re-executes the flowchart of FIG. 17.

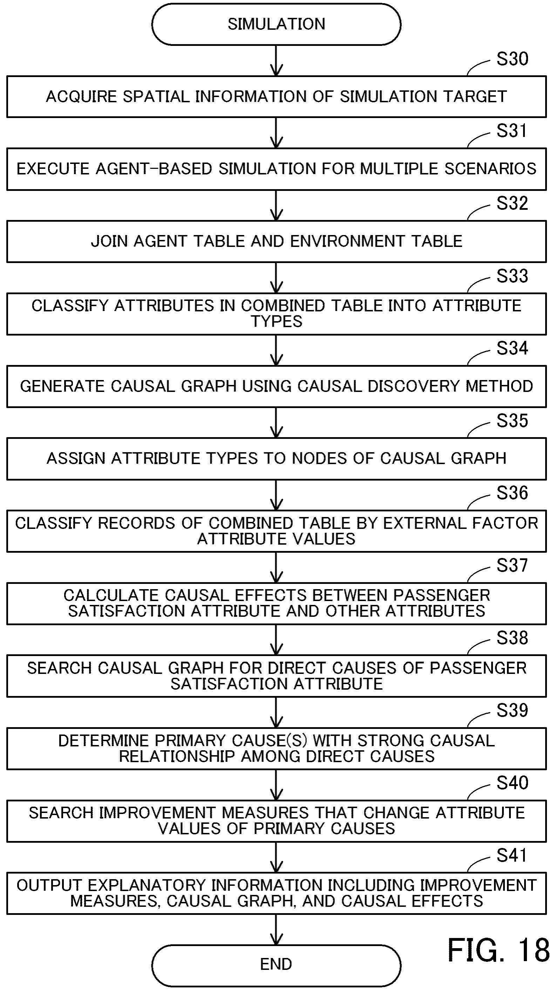

FIG. 18 is a flowchart illustrating an example of a simulation procedure.

(S30) The simulator 124 acquires spatial information of the simulation target space.

(S31) The simulator 124 executes an agent-based human behavior simulation for a plurality of scenarios defined in the spatial information. In different scenarios, the values of external factor attributes differ. As a result, an agent table and an environment table are generated.

(S32) The preprocessing unit 125 joins the agent table and the environment table. For example, the preprocessing unit 125, based on a time included in the agent table, searches the environment table for a record that indicates an environmental state at that time and joins a record from the agent table and a record from the environment table. The preprocessing unit 125 normalizes the generated combined table so that, for each attribute, the attribute values are integers or are scaled to continuous values between 0 and 1, inclusive.

(S33) The preprocessing unit 125 classifies attributes included in the combined table into the five attribute types: passenger goal, passenger behavior, environmental state, external factor, and passenger satisfaction.

(S34) The causal analyzing unit 126 executes a causal discovery method on the combined table generated at step S32 and generates a causal graph indicating causal relationships among the five attributes types.

(S35) The causal analyzing unit 126 assigns attribute types to the nodes of the causal graph.

(S36) The causal analyzing unit 126 classifies the records included in the combined table generated at step S32 into a plurality of scenarios based on values of external factor attributes.

(S37) The causal analyzing unit 126, for each of the plurality of scenarios, calculates causal effects between the passenger satisfaction attribute and other attributes by using the records classified into the scenario.

(S38) The improvement measure determining unit 127 searches the causal graph generated at step S34 for direct causes, which are attributes directly connected to the passenger satisfaction attribute by a single causal relationship.

(S39) The improvement measure determining unit 127 determines, by using the causal effects calculated at step S37, one or more primary causes from among the direct causes that have a strong causal relationship with the passenger satisfaction attribute. For example, the improvement measure determining unit 127 selects, in at least some scenarios, direct causes whose absolute values of the causal effects exceed a threshold, or selects a predetermined number of direct causes in descending order of the absolute values of the causal effects.

(S40) The improvement measure determining unit 127 searches the improvement measure table 136 for improvement measures capable of changing attribute values of the primary causes determined at step S39.

(S41) The improvement measure determining unit 127 outputs explanatory information including the improvement measures determined at step S40, the causal graph generated at step S34, and the causal effects calculated at step S37.

As described above, the information processing apparatus 100 of the second embodiment simulates human behavior under a given spatial design using an agent-based human behavior simulation and outputs an attribute value of the target attribute that indicates goodness of the spatial design. In doing so, the information processing apparatus 100 analyzes causal relationships among multiple attributes, including the evaluation attribute and other attributes, and detects a causal chain among the attribute types of goal, action, environment, external factor, and target. The information processing apparatus 100 then identifies one or more primary causes for the target attribute and outputs explanatory information regarding the identified primary causes.

Accordingly, whereas identification of improvement points of the spatial design is difficult solely on the basis of the attribute value of the target attribute, reference to the explanatory information facilitates identification of the improvement points of the spatial design. Therefore, even when a user does not possess sufficient knowledge specific to a target space, the user is able to explore a suitable spatial design with a small number of trials. In addition, exhaustive trials of numerous candidate spatial designs are unneeded, and a burden of the human behavior simulation is reduced.

In particular, by presenting an indirect control method that changes attribute values of the primary causes, the information processing apparatus 100 facilitates modification of the spatial design by the user. The information processing apparatus 100 repeatedly outputs the explanatory information, accepts a modified spatial design, and re-executes the human behavior simulation. As a result, the spatial design is improved stepwise, and the user is able to efficiently explore a suitable spatial design with a small number of trials.

The information processing apparatus 100 also identifies one or more primary causes, among direct causes that have a causal relationship with the target attribute, based on causal effects. Consequently, attributes to be focused on for improving the attribute value of the target attribute are narrowed down, and an indirect control method having a large improvement effect is executed preferentially. The information processing apparatus 100 further calculates causal effects for each of a plurality of scenarios in which values of external factor attributes differ. Consequently, the user is able to distinguish between improvement measures that are effective irrespective of values of external factor attributes and improvement measures that are effective only in scenarios in which an external factor attribute takes a specific value, thereby narrowing down spatial designs to be tried.

The foregoing merely illustrates principles of the present invention. Numerous modifications and changes are possible to those skilled in the art, and the present invention is not limited to the exact construction and applications illustrated and described above. All corresponding modifications and equivalents are considered to fall within the scope of the invention as defined by the appended claims and equivalents thereof.

### Reference Signs List

10 information processing apparatus
11 storing unit
12 processing unit
13 simulation result data
14a, 14b, 14c, 14d attribute
15a, 15b, 15c, 15d, 15e causal relationship
16 information

## Claims

1. A simulation program that causes a computer to execute a process comprising:
obtaining simulation result data including a plurality of records corresponding to a plurality of agents that act within a designated space, each of the plurality of records including attribute values of a plurality of attributes concerning an action result of one agent among the plurality of agents;
detecting, based on the simulation result data, one or more causal relationships among the plurality of attributes, each indicating that one of the plurality of attributes is a cause of another of the plurality of attributes;
determining, based on the one or more causal relationships, a cause attribute among the plurality of attributes that indicates a cause for a target attribute that indicates an evaluation of the space; and
outputting information corresponding to the cause attribute.

2. The simulation program according to claim 1, wherein the information corresponding to the cause attribute includes modification proposal information that indicates a method for modifying the space in order to change an attribute value of the cause attribute.

3. The simulation program according to claim 1, wherein
the process further includes extracting, from the plurality of attributes, two or more attributes of a type selected from the group consisting of a goal attribute that indicates a goal of the one agent, an action attribute that indicates an action executed by the one agent, an environment attribute that indicates an interaction between the one agent and the space, an external factor attribute that indicates a constraint imposed on the one agent by the space, and the target attribute, and
the detecting of the one or more causal relationships includes detecting the one or more causal relationships among the two or more attributes.

4. The simulation program according to claim 1, wherein
the process further includes calculating a causal effect between the target attribute and another attribute among the plurality of attributes based on the simulation result data, and
the determining of the cause attribute includes determining the cause attribute based on the one or more causal relationships and the causal effect.

5. The simulation program according to claim 4, wherein
the plurality of records includes records having different attribute values of an external factor attribute among the plurality of attributes, the external factor attribute indicating a constraint imposed on the one agent by the space, and
the calculating of the causal effect includes calculating the causal effect for each group of records having the same attribute value of the external factor attribute.

6. The simulation program according to claim 1, wherein the process further includes:
accepting, after the outputting of the information corresponding to the cause attribute, spatial information indicating a modified space; and
simulating actions of the plurality of agents within the modified space.

7. A simulation method executed by a computer, the simulation method comprising:
obtaining simulation result data including a plurality of records corresponding to a plurality of agents that act within a designated space, each of the plurality of records including attribute values of a plurality of attributes concerning an action result of one agent among the plurality of agents;
detecting, based on the simulation result data, one or more causal relationships among the plurality of attributes, each indicating that one of the plurality of attributes is a cause of another of the plurality of attributes;
determining, based on the one or more causal relationships, a cause attribute among the plurality of attributes that indicates a cause for a target attribute that indicates an evaluation of the space; and
outputting information corresponding to the cause attribute.

8. An information processing apparatus comprising:
a storing unit for storing simulation result data including a plurality of records corresponding to a plurality of agents that act within a designated space, each of the plurality of records including attribute values of a plurality of attributes concerning an action result of one agent among the plurality of agents; and
a processing unit for detecting, based on the simulation result data, one or more causal relationships among the plurality of attributes, each indicating that one of the plurality of attributes is a cause of another of the plurality of attributes, determining, based on the one or more causal relationships, a cause attribute among the plurality of attributes that indicates a cause for a target attribute that indicates an evaluation of the space, and outputting information corresponding to the cause attribute.
